(19) Europäisches Patentamt
European Patent Office
Office européen des brevets

(11) **EP 3 835 364 A1**

## (12) EUROPEAN PATENT APPLICATION

(43) Date of publication:
**16.06.2021 Bulletin 2021/24**

(21) Application number: **19215521.6**

(22) Date of filing: **12.12.2019**

(51) Int Cl.:
*C08L 95/00* (2006.01)          *C08L 23/20* (2006.01)
*D06N 5/00* (2006.01)           *E01C 7/18* (2006.01)
*E04D 5/10* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(71) Applicant: **Basell Poliolefine Italia S.r.l.**
**20121 Milano (IT)**

(72) Inventors:
• **GALVAN, Monica**
  **44122 Ferrara (IT)**

• **MARCHINI, Roberta**
  **44122 Ferrara (IT)**
• **BAUDIER, Vincent**
  **1040 Brussels (BE)**
• **BIONDINI, GISELLA**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

### (54) MIXTURES OF BITUMEN AND BUTENE POLYMERS

(57) The present disclosure relates to a mixture comprising:
(A) 70%-98% by weight of a bitumen; and
(B) 2%-30% by weight of a copolymer of butene-1 with Melt Flow Rate values, measured according to ISO 1133 (190°C, 2.16kg), of from 200 to 1500 g/10min.;
wherein the amounts of (A) and (B) are referred to the total weight of (A) + (B).

**Description**

FIELD OF THE INVENTION

The present disclosure relates to mixtures comprising bitumen and a butene-1 polymer having a high Melt Flow Rate value.

BACKGROUND OF THE INVENTION

Olefin polymers are introduced in bitumen in order to modify its characteristics and make it more suitable for the use for which it is destined. In fact bitumens have various applications, such as the preparation of roofing or road paving materials.

For instance, published European patent application EP-A-592852 describes mixtures of bitumen and polymer compositions comprising a polypropylene component and an ethylene copolymer which is soluble in xylene at 25°C.

Such mixtures achieve an improved set of properties, in particular flexibility at low temperature, resistance to penetration and softening, and ductility.

However to obtain an optimal dispersion in the bitumen component, the said polymer compositions generally require a degradation (visbreaking) treatment, which brings the intrinsic viscosity of the xylene-soluble fraction of the ethylene copolymer to sufficiently low values.

In WO2009/068371 are described mixtures of bitumen and polymer compositions which, in addition to the said polypropylene component and ethylene copolymer, comprise a butene-1 polymer.

Such butene-1 polymer is added in order to reduce the overall viscosity of the polymer component and consequently to achieve an optimal dispersion of the same in the bitumen component, without worsening the final mechanical properties.

It has now been found that the addition to bitumen of relatively low amounts of polybutene-1 with a very high Melt Flow Rate value provides a significant increase of the resistance to penetration even in the absence of additional olefin polymers, without requiring any visbreaking step.

SUMMARY OF THE INVENTION

Thus the present disclosure provides a mixture of bitumen and a butene-1 polymer comprising:

(A) 70%-98% by weight of bitumen; and

(B) 2%-30% by weight of a copolymer of butene-1 with at least one comonomer selected from ethylene, propylene, $C_5$-$C_{10}$ alpha-olefins and mixtures thereof, having a copolymerized comonomer content of 1%-10% by mole and Melt Flow Rate (MFR) values, measured according to ISO 1133-2:2011 at 190°C, 2.16kg, of from 900 to 2,000 g/10min., preferably from 1,000 to 1,500 g/10min., more preferably from 1,100 to 1,500 g/10min;

wherein the amounts of (A) and (B) are referred to the total weight of (A) + (B).

The mixture is also endowed with a good balance between softening point (measured with the Ring and Ball method) and resistance to embrittlement (measured as Fraass breaking point), which are at least equal to those of the bitumen component.

DETAILED DESCRIPTION OF THE INVENTION

Preferred amounts of components (A) and (B) are 3%-15% by weight of (A) and 85%-97% by weight of (B), more preferred are 3%-10% by weight of (A) and 90%-97% by weight of (B).

The bitumen component (A) includes solid, semi-solid or viscous distillation residues of the petroleum refinery process, consisting predominantly of high molecular weight hydrocarbons, the structure of which can be partially altered, for example by oxidation.

It can be obtained either by using steam refining (SR) or visbreaking (VB) processes.

The at least one comonomer in the butene-1 copolymer component (B) is selected from ethylene, propylene, $C_5$-$C_{10}$ alpha-olefins and mixtures thereof, preferably said at least one comonomer can be selected from among ethylene, propylene, hexene-1, octene-1 and mixtures thereof.

More preferably the at least one comonomer can be ethylene.

In one embodiment, the butene-1 copolymer component (B) may have a copolymerized comonomer content, in particular a copolymerized ethylene content, of 1%-6%, by mole, preferably of from 1.5% to less than 4% by mole, more preferably of 1.5%-3% by mole.

Preferably, the butene-1 copolymer component (B) may have at least one of the following additional features:

(a) a molecular weight distribution (Mw/Mn) lower than 4, preferably lower than 3; more preferably lower than 2.5, the lower limit being of 1.5 in all cases; and/or
(b) melting point (TmII) lower than 110°C, preferably lower than 100°C, more preferably lower than 90°C; and/or
(c) melting point (TmII) higher than 80°C; and/or
(d) glass transition temperature (Tg) in the range from - 40°C to - 10°C, preferably from -30°C to -10°C; and/or
(e) rotational (Brookfield) viscosity at 180°C (shear rate 100 s-1) of from 5,000 to 50,000 mPa.sec, in particular from 8,000 to 20,000 mPa.sec; and/or
(f) X-ray crystallinity comprised in the range 25-65%.

The melting temperature TmII is measured by Differential Scanning Calorimetry (DSC) and corresponds to the higher melting point in the DSC pattern obtained with the second heating run.

In one embodiment, the butene-1 copolymer (B) may have all the additional features (a)-(f).

Optionally, the butene-1 copolymer component (B) may have at least one of the further following additional features:

(i) intrinsic viscosity (IV) measured in tetrahydronaphtalene (THN) at 135°C equal to or lower than 0.8 dl/g, preferably comprised between 0.2 and 0.6 dl/g; and/or
(ii) a density of 0.885-0.925 $g/cm^3$, in particular of 0.890-0.920 $g/cm^3$.

The butene-1 copolymer component (B) can be obtained by copolymerizing butene-1 and the at least one comonomer in the presence of a catalyst system obtainable by contacting:

- a stereorigid metallocene compound;
- an alumoxane or a compound capable of forming an alkyl metallocene cation; and, optionally,
- an organo aluminum compound.

Specific examples of metallocene compounds are dimethylsilyl{(2,4,7-trimethyl-1-indenyl)-7-(2,5-dimethyl-cyclopenta[1,2-b:4,3-b']-dithiophene)} zirconium dichloride; dimethylsilanediyl{(1-(2,4,7-trimethylindenyl)-7-(2,5-dimethyl-cyclopenta[1,2-b:4,3-b']-dithiophene)}Zirconium dichloride and dimethylsilanediyl{(1-(2,4,7-trimethylindenyl)-7-(2,5-dimethyl-cyclopenta[1,2-b:4,3-b']-dithiophene)}zirconium dimethyl.

Examples of alumoxanes are methylalumoxane (MAO), tetra-(isobutyl)alumoxane (TIBAO), tetra-(2,4,4-trimethyl-pentyl)alumoxane (TIOAO), tetra-(2,3-dimethylbutyl)alumoxane (TDMBAO) and tetra-(2,3,3-trimethylbutyl)alumoxane (TTMBAO).

Examples of compounds able to form an alkylmetallocene cation are compounds of formula $D^+E^-$, wherein $D^+$ is a Brønsted acid, able to donate a proton and to react irreversibly the metallocene and $E^-$ is a compatible anion, which is able to stabilize the active catalytic species originating from the reaction of the two compounds, and which is sufficiently labile to be able to be removed by an olefinic monomer. Preferably, the anion $E^-$ comprises of one or more boron atoms.

Examples organo aluminum compound are trimethylaluminum (TMA), triisobutylaluminium (TIBA), tris(2,4,4-trimethyl-pentyl)aluminum (TIOA), tris(2,3-dimethylbutyl)aluminium (TDMBA) and tris(2,3,3-trimethylbutyl)aluminum (TTMBA).

The patent applications WO2004/099269, WO2006/045687, WO2015/074830 and WO2018/007280, which are herein incorporated by reference, describe a process and a catalysts system suitable for producing the butene-1 copolymer component (B).

The butene-1 copolymer component (B) can be obtained by a polymerization process carried out in one or more reactors connected in series. In the latter case, the catalyst can be added in the first reactor only, or in more than one reactor. As explained in WO2004/099269, the polymerization process can be carried out in the liquid phase, optionally in the presence of an inert hydrocarbon solvent, or in the gas phase, using fluidized bed or mechanically agitated gas phase reactors. Preferably, the polymerization process is carried out by using liquid butene-1 as polymerization medium. The polymerization temperature ranges from 20°C to 150°C, preferably from 50°C to 90°C, more preferably it is from 65°C to 82°C.

As explained in WO2006/045687, hydrogen can be advantageously used to regulate the molecular weight of butene-1 copolymers. The concentration of hydrogen during the polymerization reaction carried out in the liquid phase is preferably from 2000 molar ppm to 6000 molar ppm.

Butene-1 copolymers having low melting point can be obtained by properly selecting the copolymerized comonomer content, in particular ethylene content. Thus, the butene-1 copolymer component (B) can be obtained with a polymerization process wherein the (total) amount of the comonomer, in particular of ethylene, in the liquid phase ranges from 0.1wt.% to 8wt.%, preferably from 0.2 wt.% to 6 wt.%, with respect to the total weight of butene-1 monomer present in the polymerization reactor.

The present mixture can optionally contain one or more fillers.

Such fillers, hereinafter identified as component (C), are preferably selected from the group consisting of calcium carbonate, limestone, talc, graphite, carbon black, silica and clay.

The amount of filler(s) (C) in the present mixture may be from 5 to 50% by weight with respect to the total weight of the mixture, preferably from 10 to 35% by weight.

Moreover the present mixture may contain at least one other type of polymer, hereinafter identified as component (D), in addition to the the butene-1 copolymer component (B).

For example, the mixture may comprise, as component (D), one or more olefinic or nonolefinic polymers. In particular, such additional polymers (D) can be selected from the group consisting of amorphous or atactic polymers (in particular amorphous polyolefins such as amorphous polypropylene), styrene-butadiene-styrene (SBS) copolymers, ethylene polyvinyl acetate, low or high density polyethylene, and other polyolefins, in particular isotactic polypropylene and ethylene-propylene copolymers.

The butene-1 copolymer component (B) and all the other described components are incorporated in the bitumen according to known methods.

For example it is possible to blend the components in mixers usually employed in the art, as Banbury mixers or screw extruders. Generally the butene-1 copolymer component (B) and the other optional polymer components are mixed with the bitumen at temperatures higher than their melting or softening point.

Preferably the mixing process is carried out at a temperature from 150 to 250°C.

The fillers are preferably added when the butene-1 copolymer component (B) and the other optional polymer components are already dispersed in the bitumen.

Preferably, the present mixture has one or more of the following features:

- Penetration of 65 dmm or less, more preferably of 55 dmm or less, in particular from 35 to 65 dmm or from 35 to 55 dmm;
- Ring & Ball of 35 to 55°C;
- Fraass of - 5 to 0°C.

The present mixture can be used in the commonly known applications of polymer modified bitumens, in particular for road paving and in the preparation of roofing membranes.

EXAMPLES

The practice and advantages of the various embodiments, compositions and methods as provided herein are disclosed below in the following examples. These Examples are illustrative only, and are not intended to limit the scope of the appended claims in any manner whatsoever.

The following analytical methods are used to determine the properties reported in the description and in the examples.

**Melt flow rate (MFR)** was measured according to ISO 1133-2:2011 at 190°C, with a load of 2.16kg.

**Comonomer content (wt.%)** measured via IR spectroscopy.

The spectrum of a pressed film of the polymer was recorded in absorbance vs. wavenumbers (cm$^{-1}$). The following measurements were used to calculate the ethylene content:

a) area (At) of the combination absorption bands between 4482 and 3950 cm$^{-1}$ which is used for spectrometric normalization of film thickness;
b) factor of subtraction (FCR$_{C2}$) of the digital subtraction between the spectrum of the polymer sample and the absorption band due to the sequences BEE and BEB (B: 1-butene units, E: ethylene units) of the methylenic groups (CH$_2$ rocking vibration);
c) Area (A$_{C2,block}$) of the residual band after subtraction of the C$_2$PB spectrum. It comes from the sequences EEE of the methylenic groups (CH$_2$ rocking vibration).

APPARATUS

A Fourier Transform Infrared spectrometer (FTIR) was used, which is capable of providing the spectroscopic measurements above reported. A hydraulic press with platens heatable to 200°C (Carver or equivalent) was used.

METHOD

Calibration of (BEB + BEE) sequences

A calibration straight line is obtained by plotting %(BEB + BEE)wt vs. $FCR_{C2}/A_t$. The slope Gr and the intercept Lr are calculated from a linear regression.

Calibration of EEE sequences

A calibration straight line is obtained by plotting %(EEE)wt vs. $A_{C2,block}/A_t$. The slope $G_H$ and the intercept $I_H$ are calculated from a linear regression.

Sample preparation

Using a hydraulic press, a thick sheet was obtained by pressing about g 1.5 of sample between two aluminum foils. If homogeneity is in question, a minimum of two pressing operations are recommended. A small portion was cut from this sheet to mold a film. Recommended film thickness ranges between 0.1-0.3 mm. The pressing temperature was 140 $\pm$ 10 °C. A crystalline phase modification takes place with time, therefore it is recommended to collect the IR spectrum of the sample film as soon as it is molded.

Procedure

The instrument data acquisition parameters were as follows:

Purge time: 30 seconds minimum.
Collect time: 3 minutes minimum.
Apodization: Happ-Genzel.
Resolution: 2 cm$^{-1}$.
Collect the IR spectrum of the sample vs. an air background.

CALCULATION

Calculate the concentration by weight of the BEE + BEB sequences of ethylene units:

$$\%(BEE + BEB)wt = Gr\frac{FCR_{C2}}{A_t} + I_r$$

Calculate the residual area (AC2,block) after the subtraction described above, using a baseline between the shoulders of the residual band.
Calculate the concentration by weight of the EEE sequences of ethylene units:

$$\%(EEE)wt = G_H\frac{A_{C2,block}}{A_t} + I_H$$

Calculate the total amount of ethylene percent by weight:

$$\% C2wt = [\%(BEE + BEB)wt + \%(EEE)wt]$$

**Mw/Mn determination.** Measured by way of Gel Permeation Chromatography (GPC) in 1,2,4-trichlorobenzene (TCB). Molecular weight parameters (Mn, Mw, Mz) and molecular weight distributions Mw/Mn for all the samples were measured by using a GPC-IR apparatus by PolymerChar, which was equipped with a column set of four PLgel Olexis mixed-bed (Polymer Laboratories) and an IR5 infrared detector (PolymerChar). The dimensions of the columns were 300 $\times$ 7.5 mm and their particle size was 13 $\mu$m. The mobile phase flow rate was kept at 1.0 mL/min. All the measurements were carried out at 150 °C. Solution concentrations were 2.0 mg/mL (at 150 °C) and 0.3 g/L of 2,6-diterbuthyl-p-chresole were added to prevent degradation. For GPC calculation, a universal calibration curve was obtained using 12 polystyrene (PS) standard samples supplied by PolymerChar (peak molecular weights ranging from 266 to 1220000). A third-order polynomial fit was used for interpolate the experimental data and obtain the relevant calibration curve. Data acquisition and processing was done by using Empower 3 (Waters). The Mark-Houwink relationship was used to determine the molecular weight distribution and the relevant average molecular weights: the K values were KPS = $1.21 \times 10^{-4}$ dL/g and KPB = $1.78 \times 10^{-4}$ dL/g for PS and polybutene (PB) respectively, while the Mark-Houwink exponents $\alpha = 0.706$ for PS and $\alpha = 0.725$ for PB were used.

For butene/ethylene copolymers, as far as the data evaluation is concerned, it was assumed for each sample that the composition was constant in the whole range of molecular weight and the K value of the Mark-Houwink relationship was calculated using a linear combination as reported below: $K_{EB} = x_E K_{PE} + x_B K_{PB}$

where $K_{EB}$ is the constant of the copolymer, $K_{PE}$ ($4.06 \times 10^{-4}$, dL/g) and $K_{PB}$ ($1.78 \times 10^{-4}$ dL/g) are the constants of polyethylene (PE) and PB, $x_E$ and $x_B$ are the ethylene and the butene weight relative amount with $x_E + x_B = 1$. The Mark-Houwink exponents $\alpha = 0.725$ was used for all the butene/ethylene copolymers independently on their composition. End processing data treatment was fixed for all samples to include fractions up at 1000 in terms of molecular weight equivalent. Fractions below 1000 were investigated via GC.

**The thermal properties** were determined by Differential Scanning Calorimetry (D.S.C.) on a Perkin Elmer DSC-7 instrument. The melting temperatures of butene-1 copolymers were determined according to the following method:

- TmII (melting temperature/s measured in second heating run): a weighted sample (5-10 mg) obtained from the polymerization was sealed into aluminium pans and heated at 200°C with a scanning speed corresponding to 10°C/minute. The sample was kept at 200°C for 5 minutes to allow a complete melting of all the crystallites thus cancelling the thermal history of the sample. Successively, after cooling to -20°C with a scanning speed corresponding to 10°C/minute, the peak temperature was taken as crystallization temperature (Tc). After standing 5 minutes at -20°C, the sample was heated for the second time at 200°C with a scanning speed corresponding to 10°C/min. In this second heating run, the peak temperature/s measured were marked as (TmII) and the area under the peak (or peaks) as global melting enthalpy (DH TmII).

- The melting enthalpy and the melting temperature were measured also after aging (without cancelling the thermal history) as follows by using the Differential Scanning Calorimetry (D.S.C.) on an Perkin Elmer DSC-7 instrument. A weighted sample (5-10 mg) obtained from the polymerization was sealed into aluminium pans and heated at 200°C with a scanning speed corresponding to 10°C/minute. The sample was kept at 200°C for 5 minutes to allow a complete melting of all the crystallites. The sample was then stored for 10 days at room temperature. After 10 days the sample was subjected to DSC, it was cooled to -20°C, and then it was heated at 200°C with a scanning speed corresponding to 10°C/min. In this heating run, the peak temperature (or temperatures when more than one peak was present) were recorded as the melting temperatures (TmI), and the area under the peak (or peaks) as global melting enthalpy after 10 days (DH TmI).

**Glass transition temperature (Tg) via Dynamic Mechanical Thermal Analysis (DMTA).** Molded specimens of 76 mm by 13 mm by 1 mm were fixed to the DMTA machine for tensile stress. The frequency of the tension and relies of the sample was fixed at 1 Hz. The DMTA translates the elastic response of the specimen starting from -100°C to 130°C. In this way it is possible to plot the elastic response versus temperature. The elastic modulus for a viscoelastic material is defined as E=E'+iE". The DMTA can split the two components E' and E" by their resonance and plot E' vs temperature and E/E" = tan ($\delta$) vs temperature. The glass transition temperature Tg is assumed to be the temperature at the maximum of the curve E/E" = tan ($\delta$) vs temperature.

**Rotational (Brookfield) viscosity**

Measured at 180°C and a deformation rate of and 100 s$^{-1}$, using a RheolabQC instrument, which is a rotational rheometer, consisting of a high-precision encoder and a dynamic EC motor. It is possible to select between controlled shear rate (CR) and controlled shear stress (CS) test settings. It is suitable for investigations on the mixing and stirring behavior of emulsions and dispersions and pastes using concentric cylinder systems, double gap systems and different vane geometries and spindles. During the test, the sample was subjected at a deformation rate sweep from 1 s$^{-1}$ to 1000 s$^{-1}$. The torque was measured for each deformation rate and the corresponding viscosity was calculated by the instrument software.

**Crystallinity** was measured by X-Ray diffraction according to the following method: The instrument used to measure crystallinity was a X-ray Diffraction Powder Diffractometer (XDPD) that uses the Cu-K$\alpha$1 radiation with fixed slits and able to collect spectra between diffraction angle $2\Theta = 5°$ and $2\Theta = 35°$ with step of 0.1° every 6 seconds. The samples were diskettes of about 1.5-2.5 mm of thickness and 2.5-4.0 cm of diameter made by compression molding. The diskettes were aged at 23°C for 96 hours. After this preparation the specimen was inserted in the XDPD sample holder. Set the XRPD instrument in order to collect the XRPD spectrum of the sample from diffraction angle $2\Theta = 5°$ to $2\Theta = 35°$ with step of 0.1° by using counting time of 6 seconds, at the end the final spectrum is collected.

Defining Ta as the total area between the spectrum profile and the baseline expressed in counts/sec•2Θ.; and Aa as the total amorphous area expressed in counts/sec•2Θ. Ca is total crystalline area expressed in counts/sec•2Θ.

The spectrum or diffraction pattern was analyzed in the following steps:

1) define a suitable linear baseline for the whole spectrum and calculate the total area (Ta) between the spectrum profile and the baseline;

2) define a suitable amorphous profile, along the whole spectrum, that separate , the amorphous regions from the crystalline ones according to the two phase model;

3) calculate the amorphous area (Aa) as the area between the amorphous profile and the baseline;

4) calculate the crystalline area (Ca) as the area between the spectrum profile and the amorphous profile as Ca = Ta- Aa; and

5) Calculate the degree of crystallinity of the sample using the following formula: %Cr = 100 x Ca / Ta

**Intrinsic viscosity:** determined in tetrahydronaphthalene at 135 °C according to norm ASTM D 2857-16.

**Density:** Determined according to norm ISO 1183-1:2012 at 23°C, method A, Part 1: immersion method. Test specimens were obtained from compression moulded plaques. Density was measured after 10 days conditioning.

The properties of the polymer composition/bitumen mixtures were determined as follows.

| Property | Method |
|---|---|
| Ring & Ball (R&B): | EN 1427:2015; |
| Penetration: | EN 1426:2015; |
| Fraass | EN 12593:2015 |

The R&B test determines the temperature at which a layer of bitumen, in a brass ring, experiences a certain deformation under the weight of a steel ball as the temperature rises.

The penetration test determines depth, measured in 1/10 mm, to which a 100 g needle penetrates in 5 seconds into the bitumen at a temperature of 25 °C.

The Fraass test determines the temperature at which a thin bitumen layer on a steel sheet cracks during uniform cooling when bent.

### Example 1

The following materials were used to prepare the mixture of bitumen (A) and a butene-1 polymer (B).

Bitumen (A)

Bitumen having R&B = 43°C, Penetration = 77dmm and Fraas = -3°C.

Butene-1 polymer (B)

Prepared by polymerization with a metallocene catalyst, as hereinbelow explained.

**Preparation of catalyst components:** Dimethylsilyl{(2,4,7-trimethyl-l-indenyl)-7-(2,5-dimethyl-cyclopenta[1,2-b:4,3-b']-dithiophene)} zirconium dichloride (metallocene A-1) was prepared according to Example 32 of WO01/47939.

**Preparation of the catalytic solution:** Under nitrogen atmosphere, 6400 g of a 33 g/L solution of triisobutylaluminium (TIBA) in isododecane and 567 g of 30% wt/wt solution of methylalumoxane (MAO) in toluene were loaded in a 20 L jacketed glass reactor, stirred by means of an anchor stirrer, and allowed to react at room temperature for about 1 hour under stirring.

After this time, 1.27 g of metallocene A-1 was added and dissolved under stirring for about 30 minutes.

The final solution was discharged from the reactor into a cylinder through a filter to remove eventual solid residues.

The composition of the solution resulted to be:

| Al (wt.%) | Zr (wt.%) | Al/Zr (mol ratio) | metallocene conc. (mg/l) |
|---|---|---|---|
| 1.72 | 0.0029 | 2001 | 137 |

**Polymerization**

The polymerization was carried out in two stirred reactors operated in series, in which liquid butene-1 constituted the liquid medium. The catalyst system described above was fed in both reactors. The polymerization conditions are reported in Table 1. The butene-1 copolymer was recovered as melt from the solution and cut in pellets. The copolymer was further characterized and the data are reported in Table 2.

Table 1

|  |  | Example 1 |
|---|---|---|
| **First reactor** |  |  |
| Temperature | °C | 75 |
| $H_2$ in liquid phase | molar ppm | 3248 |
| $C_2$ in liquid phase | wt.% | 0.3 |
| Mileage | Kg/gMe | 1485 |
| Split | wt.% | 60 |
| $C_2$ content | wt.% | 1 |
| $C_2$ content | mole% | 1.98 |
| **Second reactor** |  |  |
| Temperature | °C | 75 |
| $H_2$ in liquid phase | molar ppm | 3248 |
| $C_2$ in liquid phase | wt.% | 0.4 |
| Split | wt.% | 40 |
| $C_2$ content | wt.% | 1 |
| $C_2$ content | mole% | 1.98 |
|  |  |  |
| Total mileage | Kg/gMe | 1539 |
| Total $C_2$ content | wt.% | 1.0 |
| Total $C_2$ content | mole% | 1.98 |
| Note: $C_2$ = ethylene; kg/gMe = kilograms of polymer per gram of metallocene A-1; Split = amount of polymer produced in the concerned reactor. | | |

Table 2

|  |  | Example 1 |
|---|---|---|
| MFR (190°C/2.16 Kg) | g/10min. | 1200 |
| Intrinsic viscosity (IV) | dl/g | 0.4 |
| Mw/Mn |  | 2.1 |
| TmII | °C | 81.9 |
| TmI | °C | 103 |
| Tg | °C | -13 |

(continued)

|  |  | Example 1 |
|---|---|---|
| Viscosity (180°C) | mPa.s | 10,000 |
| Crystallinity | % | 58 |
| Density | g/cm$^3$ | 0.9090 |

## Preparation of the mixture

A mixture of 95% by weight of bitumen (A) with 5% by weight of butene-1 polymer (B) was obtained in a vessel heated at 180°C, equipped with a standard mixing unit.

The final mixture was poured into proper moulds to obtain the test specimens.

The properties of the so obtained mixture are reported in Table 3, together with the properties of the bitumen in the pure state, designated as Comparison Example 1.

Table 3

|  |  | Example 1 | Comp. Example 1 |
|---|---|---|---|
| R&B | °C | 43 | 43 |
| Penetration | dmm | 45 | 77 |
| Fraas | °C | -3 | -3 |

**Claims**

1. A mixture of bitumen and a butene-1 polymer comprising:

    (A) 70%-98% by weight of bitumen; and
    (B) 2%-30% by weight of a copolymer of butene-1 with at least one comonomer selected from ethylene, propylene, $C_5$-$C_{10}$ alpha-olefins and mixtures thereof, having a copolymerized comonomer content of 1%-10% by mole and Melt Flow Rate (MFR) values, measured according to ISO 1133-2:2011 at 190°C, 2.16kg, of from 900 to 2,000 g/10min., preferably from 1,000 to 1,500 g/10min., more preferably from 1,100 to 1,500 g/10min;

    wherein the amounts of (A) and (B) are referred to the total weight of (A) + B).

2. The mixture according to claim 1, wherein the at least one comonomer in the butene-1 copolymer component (B) is selected from ethylene, propylene, hexene-1, octene-1 and mixture thereof, preferably the at least one comonomer is ethylene.

3. The mixture according to claim 1 or 2, wherein the butene-1 copolymer component (B) has a copolymerized comonomer content of 1%-6%, by mole, preferably of from 1.5% to less than 4% by mole, more preferably of 1.5%-3% by mole.

4. The mixture according to any one of claims 1-3, wherein the butene-1 copolymer component (B) has at least one of the following additional features:

    (a) a molecular weight distribution (Mw/Mn) lower than 4, preferably lower than 3; more preferably lower than 2.5, the lower limit being of 1.5 in all cases; and/or
    (b) melting point (TmII) lower than 110°C, preferably lower than 100°C, more preferably lower than 90°C; and/or
    (c) melting point (TmII) higher than 80°C; and/or
    (d) glass transition temperature (Tg) in the range from - 40°C to - 10°C, preferably from -30°C to -10°C; and/or
    (e) rotational (Brookfield) viscosity at 180°C (shear rate 100 s-1) of from 5,000 to 50,000 mPa.sec, in particular from 8,000 to 20,000 mPa.sec; and/or
    (f) X-ray crystallinity comprised in the range 25-60%.

5. The mixture according to any one of claims 1-4, further comprising:

   (C) one or more fillers; and/or
   (D) other polyolefins, selected from amorphous polypropylene, isotactic polypropylene and ethylene-propylene copolymers.

6. A roofing membrane comprising a mixture according to any one of claims 1-5.

7. Road paving comprising a mixture according to any one of claims 1-5.

Europäisches
Patentamt

European
Patent Office

Office européen
des brevets

## EUROPEAN SEARCH REPORT

Application Number

EP 19 21 5521

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | EP 0 592 852 A1 (HIMONT INC [US]) 20 April 1994 (1994-04-20) * page 2, line 49 - line 51; claims 4-6; table 4 * * page 5, line 25 - line 43 * * the whole document * | 1-7 | INV. C08L95/00 C08L23/20 D06N5/00 E01C7/18 E04D5/10 |
| X,D | WO 2009/068371 A1 (BASELL POLIOLEFINE SRL [IT]; RIGOSI GIAN LUIGI [IT]) 4 June 2009 (2009-06-04) | 1-6 | |
| Y | * page 7, line 18 - line 22; claims 1,4; examples 1-4 * * the whole document * | 1-7 | |
| X | US 3 915 914 A (BINDER GERHARD ET AL) 28 October 1975 (1975-10-28) | 1-7 | |
| Y | * column 1, line 13 - line 18; claim 1; examples 1-16 * * column 1, line 40 - column 2, line 39 * * column 6, line 27 - column 9, line 22 * * the whole document * | 1-7 | |
| T | S. ABEDI ET AL: "Preparation of high isotactic polybutene-1", JOURNAL OF APPLIED POLYMER SCIENCE, vol. 78, no. 14, 27 December 2000 (2000-12-27), pages 2533-2539, XP055698499, US ISSN: 0021-8995, DOI: 10.1002/1097-4628(20001227)78:14<2533::AID-APP140>3.0.CO;2-U * table III * | 1-7 | TECHNICAL FIELDS SEARCHED (IPC) E01C D06Q C08L D06N E04D |

-/--

The present search report has been drawn up for all claims

| Place of search | Date of completion of the search | Examiner |
|---|---|---|
| Munich | 3 June 2020 | olde Scheper, Bernd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

# EUROPEAN SEARCH REPORT

Application Number

EP 19 21 5521

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | YAOTAO WANG ET AL: "Molecular Weight Dependency of Crystallization Line, Recrystallization Line, and Melting Line of Polybutene-1", MACROMOLECULES, vol. 47, no. 18, 12 September 2014 (2014-09-12), pages 6401-6407, XP055699194, WASHINGTON, DC, UNITED STATES ISSN: 0024-9297, DOI: 10.1021/ma501272a * table I * | 1-7 | |
| X | DE 44 16 567 A1 (HUELS CHEMISCHE WERKE AG [DE]) 16 November 1995 (1995-11-16) | 1-7 | |
| Y | * claim 1; examples 1-4 * * the whole document * | 1-7 | |
| T | HÜLS: "Vestoplast's das Polymer für die Asphaltmodifizierung", HÜLS PRODUKTINFORMATION, 1 March 1989 (1989-03-01), pages 1-4, XP055700523, * page 1 - page 2 * * the whole document * | 1-7 | TECHNICAL FIELDS SEARCHED (IPC) |
| T | Hüls: "Vestoplast", Hüls Produktinformation 2206/11.84, 1 January 1984 (1984-01-01), XP055700505, Retrieved from the Internet: URL:www.evonik.de [retrieved on 2020-06-03] * page 2 * * the whole document * | 1-7 | |

-/--

The present search report has been drawn up for all claims

| Place of search | Date of completion of the search | Examiner |
|---|---|---|
| Munich | 3 June 2020 | olde Scheper, Bernd |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 19 21 5521

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Evonik: "VESTOPLAST Designed Polymers by Adhesive Resins Product Line", , 31 March 2017 (2017-03-31), XP055523174, Retrieved from the Internet: URL:https://adhesive-resins.evonik.com/product/adhesive-resins/downloads/vestoplast%20brochure%202016.pdf [retrieved on 2018-11-13] * page 4 * ----- | 1-7 | |

TECHNICAL FIELDS
SEARCHED    (IPC)

The present search report has been drawn up for all claims

| Place of search | Date of completion of the search | Examiner |
|---|---|---|
| Munich | 3 June 2020 | olde Scheper, Bernd |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
& : member of the same patent family, corresponding
document

EPO FORM 1503 03.82 (P04C01)

**EP 3 835 364 A1**

## ANNEX TO THE EUROPEAN SEARCH REPORT
## ON EUROPEAN PATENT APPLICATION NO.

EP 19 21 5521

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2020

| Patent document cited in search report | | Publication date | Patent family member(s) | | Publication date |
|---|---|---|---|---|---|
| EP 0592852 | A1 | 20-04-1994 | AT | 157113 T | 15-09-1997 |
| | | | CN | 1087100 A | 25-05-1994 |
| | | | DE | 69313233 D1 | 25-09-1997 |
| | | | DE | 69313233 T2 | 05-03-1998 |
| | | | EP | 0592852 A1 | 20-04-1994 |
| | | | ES | 2106934 T3 | 16-11-1997 |
| | | | IT | 1255524 B | 09-11-1995 |
| | | | JP | 3594324 B2 | 24-11-2004 |
| | | | JP | H06234927 A | 23-08-1994 |
| | | | KR | 940007121 A | 26-04-1994 |
| | | | TW | 264500 B | 01-12-1995 |
| | | | US | 5360849 A | 01-11-1994 |
| WO 2009068371 | A1 | 04-06-2009 | EP | 2215166 A1 | 11-08-2010 |
| | | | JP | 5580743 B2 | 27-08-2014 |
| | | | JP | 2011504952 A | 17-02-2011 |
| | | | KR | 20100102592 A | 24-09-2010 |
| | | | US | 2010273918 A1 | 28-10-2010 |
| | | | WO | 2009068371 A1 | 04-06-2009 |
| US 3915914 | A | 28-10-1975 | DE | 2043864 A1 | 09-03-1972 |
| | | | FR | 2102024 A5 | 31-03-1972 |
| | | | GB | 1367315 A | 18-09-1974 |
| | | | US | 3915914 A | 28-10-1975 |
| DE 4416567 | A1 | 16-11-1995 | DE | 4416567 A1 | 16-11-1995 |
| | | | EP | 0685529 A1 | 06-12-1995 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 592852 A
- WO 2009068371 A
- WO 2004099269 A
- WO 2006045687 A
- WO 2015074830 A
- WO 2018007280 A
- WO 0147939 A